# FASCICULE DE BREVET EUROPEEN

(11) **EP 3 024 693 B1**
(45) Date de publication et mention de la délivrance du brevet: **22.03.2017**
(21) Numéro de dépôt: 14758599.6
(22) Date de dépôt: 10.07.2014
(51) Int. Cl.: B60N 2/10, B60N 2/44, B60N 2/42, B60N 2/24, B60N 2/427

(54) **SIEGE DE VEHICULE**
FAHRZEUGSITZ
VEHICLE SEAT

(30) Priorité: 22.07.2013 FR 1301760
(43) Date de publication de la demande: 01.06.2016
(73) Titulaire: NEXTER Systems, 42328 Roanne Cedex (FR)
(72) Inventeur: LEBAILLIF, David, F-18023 Bourges (FR); CARRIE, Sébastien, F-18023 Bourges (FR)
(74) Mandataire: Cabinet Chaillot
(86) Numéro de dépôt international: PCT/FR2014/051778
(87) Numéro de publication internationale: WO 2015/011363

(56) Documents cités:
- EP-A1- 0 069 645
- DE-A1- 10 241 250
- FR-A1- 2 932 428
- JP-A- 2003 267 101
- US-A- 5 125 598

## Description

Le domaine technique de l'invention est celui des sièges de véhicules et en particulier de véhicules blindés.

Les véhicules blindés sont susceptibles de subir des agressions de type mines sous plancher qui, même si elles n'endommagent pas la structure du véhicule, risquent de blesser les occupants du véhicule soumis à la transmission du choc par les sièges qu'ils occupent.

Pour limiter la transmission de ce choc violent aux occupants il est connu de la demande de brevet FR 2 932 428 A1 (qui correspond au préambule de la revendication principale) de recourir à un siège dont l'assise peut se dérober sous l'occupant sous l'effet du choc. Pour cela, l'assise est capable de pivoter vers le bas après libération de butées calibrées qui sont dimensionnées pour retenir l'assise dans son utilisation et pour céder lors d'un choc.

Cependant, dans les circonstances de choc provoquant le pivotement de l'assise vers le bas, celle-ci peut être amenée à voir son débattement vers le bas limité par des objets placés sous l'assise et formant obstacle, tels que du matériel transporté ou les pieds d'un autre occupant ce qui compromet l'efficacité des butées calibrées.

L'invention se propose de résoudre ce problème.

Ainsi, l'invention porte sur un siège pour véhicule comportant une assise pivotante autour d'une liaison pivot, liaison pivot permettant à l'assise d'être abaissée en position sensiblement horizontale ou relevée contre un dossier, abaissement de l'assise limité dans sa course par au moins une première butée apte à libérer l'abaissement suite à un choc, siège caractérisé en ce que l'assise comporte au moins deux panneaux adjacents aptes à effectuer un mouvement de repli l'un par rapport à l'autre autour d'un axe parallèle à la liaison pivot entre assise et dossier de manière à pouvoir rapprocher les faces supérieures des panneaux l'une de l'autre.

Avantageusement, le siège comporte une seconde butée entravant le mouvement de repli des panneaux, seconde butée libérable sous choc pour permettre le mouvement de repli.

Avantageusement, le siège comporte un moyen de rappel du panneau avant apte à maintenir ce panneau sensiblement horizontal.

Avantageusement, le moyen de rappel comporte une structure déformable.

Avantageusement, la structure déformable comporte une sangle textile comportant plusieurs plis liés par une couture calibrée au déchirement.

Avantageusement l'axe entre les deux panneaux d'assise adjacents comporte une barre de torsion.

Avantageusement le panneau avant a une longueur L inférieure ou égale au tiers de la profondeur d'assise P.

L'invention sera mieux comprise à la lecture de la description suivante et des dessins annexés, dessins dans lesquels :
la figure 1 représente une vue de côté d'un siège selon l'invention en position d'usage normale.
la figure 2 représente une vue de côté d'un siège selon l'invention en position abaissée suite à un choc.
La figure 3 représente une vue de côté d'un siège, selon une variante de l'invention, siège en position abaissée suite à un choc.

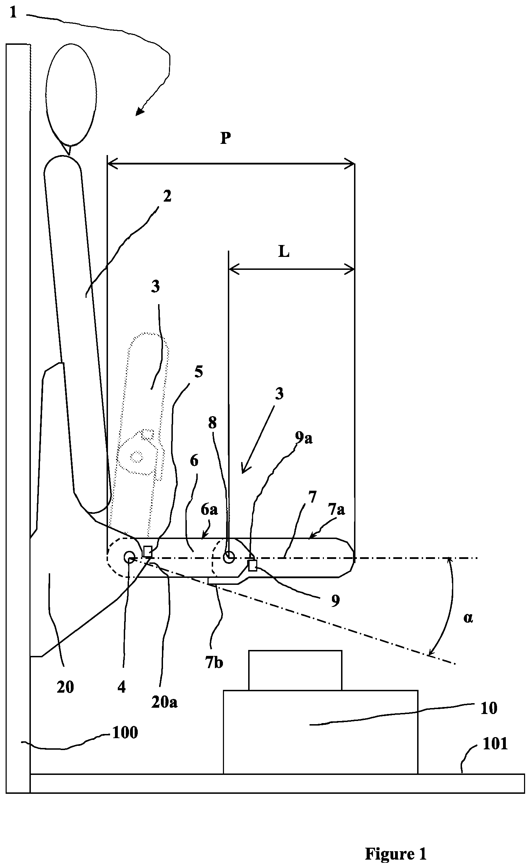

Selon la figure 1, un siège 1 selon l'invention, équipe l'habitacle d'un véhicule blindé (véhicule et habitacle non représentés) et est solidaire d'une paroi verticale 100 de l'habitacle. Le siège 1 comporte un dossier 2 et une assise 3 pouvant pivoter l'un par rapport à l'autre grâce à une liaison pivot 4 transversale. Comme représenté en pointillés à la figure 1, l'assise 3 peut ainsi être relevée pour être positionnée le long du dossier 2 ce qui limite l'encombrement du siège lorsque celui-ci n'est pas utilisé. Lorsque le siège est occupé par un passager, l'assise 3 est abaissée en position sensiblement horizontale.

Le mouvement d'abaissement de l'assise par pivotement est limité dans sa course vers le bas par une première butée 5, venant interférer avec un premier épaulement 20a, d'un support d'assise 20 solidaire du siège 1.

Selon la figure 1, l'assise 3 comporte deux panneaux adjacents 6 et 7 reliés entre eux par un axe de pivotement 8 parallèle à la liaison pivot 4. L'axe 8 permet le repli du panneau avant 7 vers le panneau arrière 6 de manière à rapprocher leurs faces supérieures 6a et 7a. L'axe 8 permet également l'abaissement M du panneau avant 7 jusqu'à une position sensiblement située dans le même plan que le panneau arrière 6.

L'abaissement du panneau avant 7 est limité par un arrêtoir 7b prenant appui sous le panneau arrière 6 adjacent. Selon un mode de réalisation particulier, le repli du panneau avant 7 vers le panneau arrière 6 pourra être empêché par une seconde butée 9 en interférence avec un deuxième épaulement 9a. On notera que l'assise 3 est située à distance du plancher 101 du véhicule. Pour l'illustration du principe de fonctionnement de l'invention, des objets 10 encombrent l'espace entre l'assise 3 et le plancher 101.

On remarque que, lorsque l'assise 3 du siège pivote comme suite à la rupture de la première butée 5 et si les panneaux avant 7 et arrière 6 restent dans le prolongement l'un de l'autre, les objets 10 empêchent le pivotement de l'assise au-delà d'un angle α qui est réduit. L'effet protecteur de la première butée ne peut donc s'exercer totalement.

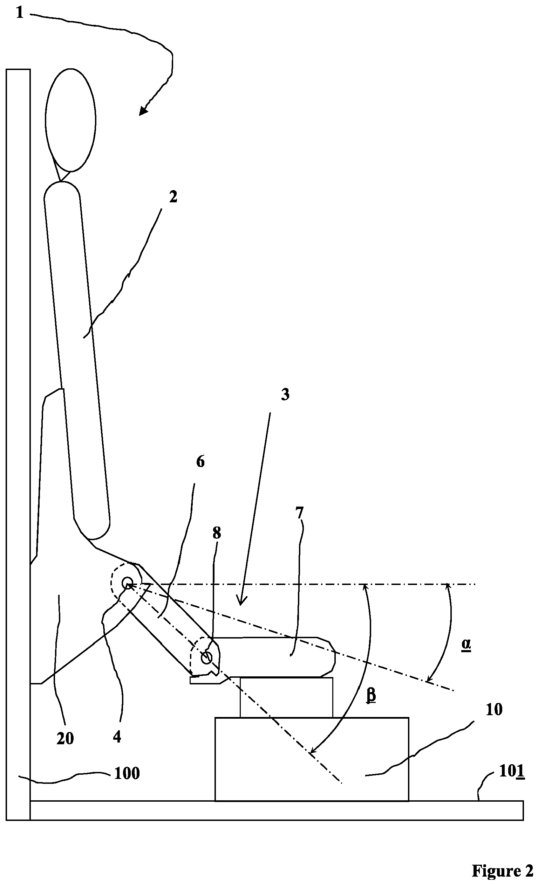

Selon la figure 2, le siège 1 est représenté dans la configuration obtenue à l'issue d'un choc violent sous le plancher, choc du type mine. La masse que représente un occupant du siège (occupant non représenté) a exercé, sous l'influence du choc, un effort vertical tel que la première butée 5 a cédé.

Grâce à l'axe de pivotement 8 et à la division de l'assise en deux panneaux 6 et 7, l'assise 3 pivote et le panneau avant 7 peut également pivoter par rapport au panneau arrière 6. Les objets 10 ne limitent donc plus le pivotement de l'assise 3 à l'angle α. L'assise 3 peut pivoter d'un angle β supérieur à α ce qui ne limite plus l'abaissement de l'assise et assure la protection de l'occupant du siège.

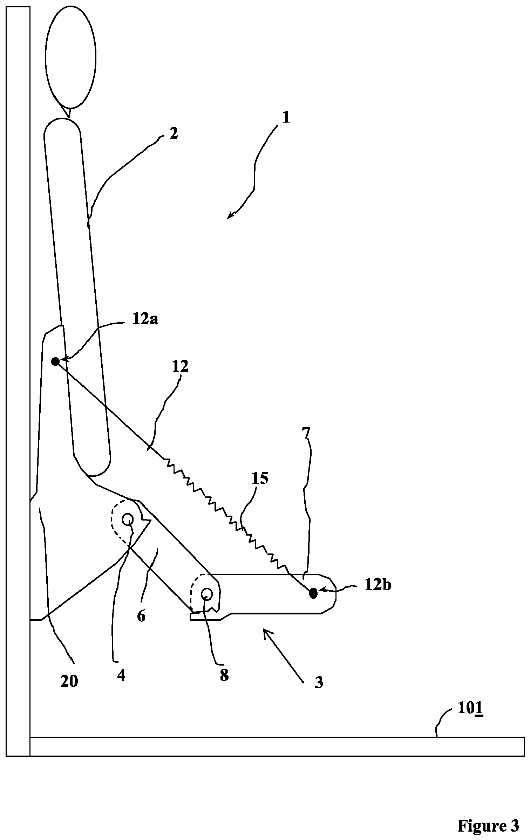

Selon le cas de figure représenté sur les figures 2 et 3, le panneau avant 7 de l'assise 3 est amené à percuter les objets 10 placés sous l'assise 3. Dans certains cas non représentés, il peut même être amené à percuter le plancher 101 du véhicule.

Sous l'influence de l'interférence avec les objets 10 ou le plancher, le panneau avant 7 se replie vers le panneau arrière 6 en tournant autour de l'axe 8.

Selon un mode particulier de réalisation, la seconde butée 9 est amenée à céder sous l'effet du poids de l'occupant combiné à l'appui du plateau sur les objets 10 posés sur le plancher.

On notera que le recours à une seconde butée 9 n'est pas obligatoire mais son usage améliorera la capacité d'absorption de l'énergie du choc. Cette capacité d'absorption pourra être complétée ou assurée entièrement par un élément déformable plastiquement ou élastiquement tel qu'une barre de torsion faisant office d'axe 8 entre les deux parties 6 et 7 de l'assise 20.

De la même manière, la liaison pivot 4 pourra comporter elle aussi un élément déformable plastiquement ou élastiquement tel qu'une barre de torsion pour optimiser l'absorption d'énergie.

Les butées 5 et 9 pourront comporter des pions 5 calibrés à la rupture en cisaillement. L'homme du métier pourra également utiliser des moyens déformables élastiquement ou plastiquement tels que des butées à billes par exemple ou des solutions comparables à celles exposées dans ladite demande de brevet FR 2 932 428 A1. L'intérêt de tels moyens est d'absorber une partie de l'énergie du choc de mine.

L'assise 3 pourra comporter des panneaux aux dimensions différentes par exemple le panneau avant 7 pourra avoir une longueur L représentant jusqu'à un tiers de la profondeur d'assise P.

Selon un mode de réalisation particulier représenté à la figure 3, le siège 1 comporte un tirant 12, monté entre deux pivots 12a,12b, et reliant le dossier 2 du siège 1 à une partie avant du panneau avant 7 de manière à ce que le panneau avant 7 reste sensiblement horizontal durant son éventuel mouvement d'abaissement suite à un choc. Le tirant 12 pourra comporter une structure déformable 15 pour contribuer à l'absorption du choc de mine. La structure déformable 15 pourra consister en une sangle textile 12 comportant plusieurs plis 15 cousus entre eux par une couture calibrée au déchirement.

## Revendications

1. Siège (1) pour véhicule comportant une assise (3) pivotante autour d'une liaison pivot (4), liaison pivot (4) permettant à l'assise (3) d'être abaissée en position sensiblement horizontale ou relevée contre un dossier (2), abaissement de l'assise (3) limité dans sa course par au moins une première butée (5) apte à libérer l'abaissement suite à un choc, siège (1) **caractérisé en ce que** l'assise (3) comporte au moins deux panneaux (6,7) adjacents aptes à effectuer un mouvement de repli l'un par rapport à l'autre autour d'un axe (8) parallèle à la liaison pivot (4) entre assise (3) et dossier (2) de manière à pouvoir rapprocher les faces supérieures des panneaux (6,7) l'une de l'autre.

2. Siège (1) selon la revendication 1, **caractérisé en ce qu'**il comporte une seconde butée (9) entravant le mouvement de repli des panneaux (6,7), seconde butée (9) libérable sous choc pour permettre le mouvement de repli.

3. Siège selon une des revendications 1 ou 2, **caractérisé en ce qu'**il comporte un moyen de rappel (12) du panneau avant (7) apte à maintenir ce panneau (7) sensiblement horizontal.

4. Siège (1) selon la revendication 3, **caractérisé en ce que** le moyen de rappel (12) comporte une structure déformable (15).

5. Siège (1) selon la revendication 4, **caractérisé en ce que** la structure déformable (15) comporte une sangle textile (15) comportant plusieurs plis liés par une couture calibrée au déchirement.

6. Siège selon une des revendications 1 à 3, **caractérisé en ce que** l'axe (9) entre les deux panneaux d'assise adjacents (6,7) comporte une barre de torsion.

7. Siège selon une des revendications 1 à 6, **caractérisé en ce que** le panneau avant (7) a une longueur L inférieure ou égale au tiers de la profondeur d'assise P.

## Patentansprüche

1. - Sitz (1) für ein Fahrzeug mit um eine Drehzapfen-Verbindung (4) herum drehbarer Sitzfläche (3), wobei die Drehzapfen-Verbindung (4) es ermöglicht, dass der Sitz (3) in im wesentlichen waagrechter Position abgesenkt oder gegen eine Lehne (2) angehoben werden kann, wobei die Senkung des Sitzes (3) in ihrem Hub durch mindestens einen ersten Endanschlag (5) begrenzt ist, der fähig ist, die Senkung nach einem Stoß freizugeben, wobei der Sitz (1) **dadurch gekennzeichnet ist, dass** die Sitzfläche (3) mindestens zwei aneinander angrenzende Platten (6, 7) umfasst, die geeignet sind, eine Abwärtsbewegung zueinander um eine Achse (8) parallel zu der Drehzapfen-Verbindung (4) zwischen Sitz (3) und Lehne (2) durchzuführen, damit die oberen Seiten der Platten (6, 7) sich einander annähern können.

2. - Sitz (1) nach Anspruch 1, **gekennzeichnet dadurch, dass** er einen zweiten Endanschlag (9) umfasst, der die Abwärtsbewegung der Platten (6, 7) behindert, wobei der zweite Endanschlag (9) unter Stoß freisetzbar ist, um die Abwärtsbewegung zu gestatten.

3. - Sitz nach einem der Ansprüche 1 oder 2, **gekennzeichnet dadurch, dass** er ein Rückstellmittel (12) für die vordere Platte (7) umfasst, das fähig ist, diese Platte (7) im wesentlichen waagrecht zu halten.

4. - Sitz (1) nach Anspruch 3, **gekennzeichnet dadurch, dass** das Rückstellmittel (12) eine verformbare Struktur (15) umfasst.

5. - Sitz (1) nach Anspruch 4, **gekennzeichnet dadurch, dass** die verformbare Struktur (15) ein Textilband (15) mit mehreren Falten umfasst, die durch eine auf Zerreißen kalibrierte Naht verbunden sind.

6. - Sitz nach einem der Ansprüche 1 bis 3, **gekennzeichnet dadurch, dass** die Achse (9) zwischen den beiden aneinander angrenzenden Sitzplatten (6, 7) einen Drehstab umfasst.

7. - Sitz nach einem der Ansprüche 1 bis 6, **gekennzeichnet dadurch, dass** die vordere Platte (7) eine Länge L hat, die geringer oder gleich einem Drittel der Tiefe P des Sitzes ist.

## Claims

1. - A seat (1) for a vehicle comprising a seating part (3) pivoting about a pivot link (4), the pivot link (4) allowing the seating part (3) to be lowered into a substantially horizontal position or lifted against a back rest (2), the lowering course of the seating part (3) being limited by at least one first stop (5) that is adapted to release the lowering following an impact, the seat (1) being **characterised in that** the seating part (3) comprises at least two adjacent panels (6,7) adapted to carry out a fold-back movement in relation to each other about an axis (8) parallel to the pivot link (4) between the seating part (3) and the back rest (2) so as to be able to bring the upper faces of the panels (6,7) towards each other.

2. - The seat (1) according to claim 1, **characterised in that** it comprises a second stop (9) impeding the fold-back movement of the panels (6,7), the second stop (9) being releasable following an impact to allow the fold-back movement.

3. - The seat according to one of claims 1 or 2, **characterised in that** it comprises front panel (7) return means (12) adapted to maintain this panel (7) substantially horizontal.

4. - The seat (1) according to claim 3, **characterised in that** the return means (12) comprises a deformable structure (15).

5. - The seat (1) according to claim 4, **characterised in that** the deformable structure (15) comprises a textile belt (15) comprising several folds connected by a tear-calibrated seam.

6. - The seat according to one of claims 1 to 3, **characterised in that** the axis (9) between both adjacent panels (6,7) of the seating part comprises a torsion bar.

7. - The seat according to one of claims 1 to 6, **characterised in that** the front panel (7) has a length L lower than or equal to a third of the depth P of the seating part.
